Europäisches Patentamt

European Patent Office

Office européen des brevets

(19)

(11) **EP 1 511 624 B1**

(12) **EUROPÄISCHE PATENTSCHRIFT**

| | |
|---|---|
| (45) Veröffentlichungstag und Bekanntmachung des Hinweises auf die Patenterteilung:<br>**07.12.2005 Patentblatt 2005/49** | (51) Int Cl.⁷: **B32B 27/18**, F16C 33/20, C08K 3/00 |
| (21) Anmeldenummer: **03757022.3** | (86) Internationale Anmeldenummer:<br>**PCT/EP2003/005886** |
| (22) Anmeldetag: **05.06.2003** | (87) Internationale Veröffentlichungsnummer:<br>**WO 2003/103954 (18.12.2003 Gazette 2003/51)** |

(54) **GLEITLAGERVERBUNDWERKSTOFF**

PLAIN BEARING COMPOSITE MATERIAL

MATERIAU COMPOSITE DE PALIER LISSE

| | |
|---|---|
| (84) Benannte Vertragsstaaten:<br>**AT BE BG CH CY CZ DE DK EE ES FI FR GB GR HU IE IT LI LU MC NL PT RO SE SI SK TR** | (72) Erfinder:<br>• HAUPERT, Frank<br>  **67705 Stelzenberg (DE)**<br>• BICKLE, Wolfgang<br>  **68799 Reilingen (DE)** |
| (30) Priorität: **07.06.2002 DE 10226266** | |
| (43) Veröffentlichungstag der Anmeldung:<br>**09.03.2005 Patentblatt 2005/10** | (74) Vertreter: **Dreiss, Fuhlendorf, Steimle & Becker Patentanwälte,<br>Postfach 10 37 62<br>70032 Stuttgart (DE)** |
| (73) Patentinhaber: **KS Gleitlager GmbH<br>68789 St. Leon-Rot (DE)** | (56) Entgegenhaltungen:<br>**DE-A- 3 601 569      US-A- 5 643 683** |

**Beschreibung**

Die Erfindung betrifft einen Gleitlagerverbundwerkstoff mit einer metallischen Stützschicht, gegebenenfalls mit einer darauf aufgebrachten porösen Trägerschicht, und mit einer eine Gleitfläche für einen Gleitpartner bildenden bleifreien Gleitschicht mit einem Gleitschichtmaterial auf Kunststoffbasis mit PEEK und mit einem Schmierstoff in Form von Zinksulfid und/oder Bariumsulfat.

Ein solcher Gleitlagerverbundwerkstoff ist bekannt aus DE 36 01 569 Al, wo PEEK als einer von mehreren Polymeren genannt ist, obschon keines der Ausführungsbeispiele PEEK umfasst. Die Druckschrift lehrt, zur Erhöhung der Verschleißfestigkeit 5- 40 Vol.-% Zinksulfid und/oder Bariumsulfat in dem Gleitschichtmaterial zu verwenden. Als die Festigkeit erhöhende Zusätze sind Glasfasern, Glasperlen, Kohlefasern, Keramikfasern und Aramidfasern genannt. Die Ausführungsbeispiele umfassen sämtlich Glasfasern oder Glasperlen.

DE 37 36 292 A1 offenbart eine separat herstellbare Gleitschicht auf Folienbasis, die dann über eine als Haftvermittler dienende Zwischenschicht oder direkt auf eine metallische Stützschicht aufbringbar ist. Als Material für die Gleitschicht ist fluorierter Kunststoff, insbesondere PTFE oder modifiziertes PTFE oder Polyimid oder PEEK als geeignet genannt. Keines der Ausführungsbeispiele umfasst PEEK. Der Gleitschicht kann gemäß dieser Druckschrift zur Verstärkung und/oder zur Verbesserung der Wärmeleitfähigkeit und/oder der Verschleißeigenschaften ein oder mehrere Füllstoffe zugegeben werden. Je nach Zielsetzung seien insbesondere Kohle, Aluminiumoxid, Keramikwerkstoffe, Glas, Bronze, Molybdändisulfid oder Siliziumcarbid eingelagert.

Gleitlager aus Gleitlagerverbundwerkstoffen mit einer Gleitschicht auf Kunststoffbasis haben in der Technik eine weite Verbreitung gefunden, und zwar für weitestreichende Anforderungsbereiche, etwa im Hinblick auf die Belastbarkeit, Chemikalienbeständigkeit oder die Temperaturbeständigkeit. Es sind Thermoplaste bekannt und erhältlich, bei denen jedoch die Temperaturbeständigkeit nur für Betriebstemperaturen bis ca. 90° C gewährleistet werden kann; es sind dies beispielsweise ABS, Hochdruck-Polyethylen (HD-PE), PVC, Polysulfon (PS) und andere. Es existiert aber auch eine Anzahl von sogenannten technischen Thermoplasten, die sich für Einsatztemperaturen bis ca. 150° C eignen, wie z. B. POM, PET, PA.

Die vorliegende Erfindung betrifft solche Gleitlagerverbundwerkstoffe, die sich für den Einsatz bei Dauergebrauchstemperaturen von oberhalb 180° C eignen sollen. Sie sollen dabei aber auch sehr gute tribologische Eigenschaften und günstige mechanische Kennwerte im Hinblick auf Umformbarkeit sowie eine hohe Chemikalienbeständigkeit aufweisen. Zudem wird an den Gleitlagerverbundwerkstoff die Forderung gestellt, dass er sich in einem industriell durchführbaren Herstellungsverfahren produzieren lässt.

Diese Aufgabe wird durch einen Gleitlagerverbundwerkstoff mit den Merkmalen des Anspruchs 1 gelöst.

Der Gleitlagerverbundwerkstoff mit Polyetheretherketon (PEEK) als matrixbildender Kunststoffkomponente erweist sich in Verbindung mit den weiteren beanspruchten Komponenten als hochtemperaturstabil, d. h. er kann bei Temperaturen oberhalb von 180° C, beispielsweise 190 bis 250° C dauerhaft eingesetzt werden. Zwar würde sich Polyphenylensulfon (PPS) als matrixbildende Kunststoffkomponente eines Gleitschichtmaterials aufgrund seiner Temperaturstabilität bis 260° C zumindest grundsätzlich eignen; PPS bildet jedoch eine im Hinblick auf ihr Haltevermögen ungenügende Matrix, die gerade beim Umformen zum Aufplatzen neigt und auch im Hinblick auf ihre tribologische Leistungsfähigkeit an diejenige von PEEK nicht anzuschließen vermag.

Die vorliegende Erfindung schließt zwar nicht aus, dass neben PEEK als matrixbildender Kunststoffkomponente noch ein oder mehrere weitere Thermoplaste in dem Gleitschichtmaterial enthalten sein dürfen. Ihr Anteil sollte aber nicht mehr als 20 Gew.-%, insbesondere nicht mehr als 10 Gew.-% des Anteils der Kunststoffkomponente in dem Gleitschichtmaterial betragen. Vorzugsweise ist die Kunststoffkomponente zu 100 % von PEEK gebildet.

Es ist zwar beispielsweise ein Gleitschichtmaterial mit PEEK als matrixbildender Kunststoffkomponente und mit 10 Gew.-% Kohlenstofffasern sowie 10 Gew.-% PTFE und 10 Gew.-% Graphit im Handel erhältlich. Durch einen Gleitlagerverbundwerkstoff mit einer porösen Trägerschicht und mit dem bekannten, in die Poren der Trägerschicht eingebrachten Gleitschichtmaterial lässt sich jedoch keine Hochtemperaturstabilität erzielen. Bei Messungen der spezifischen Verschleißrate auf einem Stift-Scheibe-Prüfstand zeigte der Gleitlagerverbundwerkstoff mit bekanntem Gleitschichtmaterial einen Totalausfall bei Temperaturen von 150° C, während sich das erfindungsgemäße Gleitschichtmaterial mit 3 bis 15 Gew.-%, insbesondere mit 5 - 15 Gew.-% Zinksulfid als Schmierstoff und 3 bis 15 Gew.-%, insbesondere 5 - 15 Gew.-% Titandioxid als härtender Komponente sowie 5 bis 15 Gew.-% Kohlenstofffasern durch hervorragende Ergebnisse auszeichnet. Obschon der Reibkoeffizient des bekannten Gleitschichtmaterials an sich sehr zufriedenstellend ist, und zwar auch bei hohen Temperaturen, verschleißt dieser Werkstoff bei hohen Temperaturen von oberhalb 150° C sehr rasch.

Die gegenüber dem bekannten Werkstoff verbesserte spezifische Verschleißrate wird auf den Zusatz von 3 bis 15 Gew.-%, insbesondere 5 - 15 Gew.-% der härtenden Komponente in Form von Titandioxid zurückgeführt. Vorzugsweise wird diese härtende Komponente in Form feiner Teilchen mit einem D50-Wert der Teilchengröße von höchstens 500 nm, vorzugsweise von höchstens 400 nm, und insbesondere von 100 - 350 nm gewählt, damit sie den Reibkoeffizienten nicht negativ beeinflussen. Der vorerwähnte D50-Wert der Teilchengröße bezeichnet eine Teilchengröße, bezüglich der 50 Gew.% des betreffenden Stoffs mit einer demgegenüber größeren Teilchengröße und 50 Gew.% mit einer demgegenüber kleineren Teilchengröße vorliegen. Da es sich bei den zuzusetzenden Schmierstoffpartikeln und bei den Partikeln der härtenden Komponente in Form von Titandioxid um in technischen Verfahren herzustellende bzw. nach technischen Verfahren sortierte pulverförmige Partikel handelt, wird üblicherweise eine glockenförmige oder annähernd Normalverteilungsform aufweisende Teilchengrößenverteilungskurve resultieren. Der D50-Wert der Teilchengröße wird dann in der Nähe des Maximums der glockenförmigen Verteilungskurve liegen. Es erweist sich im Sinne der vorliegenden Erfindung als vorteilhaft, wenn die glockenförmige Verteilungskurve derart ist, dass wenigstens 60%, insbesondere wenigstens 70% und vorzugsweise wenigstens 80 Gew.% des betreffenden Stoffs mit einer Teilchengröße innerhalb eines Teilchengrößenbereichs um das Glockenmaximum herum oder um den D50-Wert herum von ± 50% dieses Werts vorliegen, also beispielsweise bei einem D50-Wert von 330 nm in einem Teilchengrößenbereich von 330nm ±165 nm, also von 165 nm bis 495 nm liegen.

Es hat sich des Weiteren als zweckmäßig erwiesen, wenn eine Teilchengrößenverteilung derart ist, dass der Summenrückstand in Gewichtsprozent bei einer Siebanalyse mit variierender Maschenweite t, insbesondere zwischen 1 µm und 100 nm, durch folgende Beziehung beschrieben werden kann:

$$S = 100 \cdot e^{-\left(\frac{t}{d}\right)^{\beta}}$$

wobei in besonders vorteilhafter Weise die charakteristische Korngröße d zwischen 0,34 und 0,54 µm und der Formparameter β der Verteilung zwischen 2,4 und 3,4 beträgt. Eine bevorzugte Verteilung ist gekennzeichnet durch eine charakteristische Korngröße von 0,440 µm (440 nm) und einem Formparameter β von 2,87.

Es wurde ferner festgestellt, dass bei dem erfindungsgemäßen Gleitlagerverbundwerkstoff gerade unter Extremlastbedingungen auf den Zusatz von PTFE, das in üblichen Gleitwerkstoffen zwischen 2 und 15 Gew.-% vorhanden ist, verzichtet werden kann. Es wird davon ausgegangen, dass der an sich erwünschte Einfluss von PTFE auf die tribologischen Eigenschaften einer Werkstoffzusammensetzung von der beanspruchten Komponente Zinksulfid und der alternativ oder additiv hierzu beanspruchten Komponente Bariumsulfat ersetzt wird.

Durch den Zusatz von Kohlenstofffasern wird die Gleitschicht des Gleitlagerverbundwerkstoffs verstärkt, indem ihre Steifigkeit und Festigkeit, aber auch ihre Kriechfestigkeit, erhöht wird. Ferner wird der Verschleißwiderstand durch Kohlenstofffasern erhöht. Besondere Bedeutung kommt auch dem Aspekt der Wärmeleitfähigkeit zu, der durch Kohlenstofffasern in der Gleitschicht verbessert wird. Diese führen dazu, dass eine Überhitzung der Gleitschicht verhindert wird, indem die beim Betrieb unmittelbar an der Oberfläche der Gleitschicht auftretende Reibungswärme an das Innere des Gleitlagerverbundwerkstoffs, insbesondere an die metallische Komponente einer gegebenenfalls vorgesehenen porösen Trägerschicht oder direkt an die metallische Stützschicht abgeführt wird.

Es erweist sich nach einer bevorzugten Ausführungsform der Erfindung als vorteilhaft, wenn es sich bei den Kohlenstofffasern um Kurzfasern einer Länge von 50 bis 250 µm, insbesondere von 60 bis 150 µm handelt. Es wurde nämlich festgestellt, dass solchenfalls eine homogene Verteilung der Kohlenstofffasern im Gleitschichtmaterial auch innerhalb der Poren der gegebenenfalls vorgesehenen porösen Trägerschicht erreicht wird. Hierdurch kann die Wärmeleitfähigkeit weiter verbessert werden, indem die entstehende Wärme an die poröse Trägerschicht effektiv abgeleitet werden kann. Wenn nämlich die Kohlenstofffasern die angegebene Länge aufweisen, so lassen sie sich in die Poren der gegebenenfalls vorgesehenen porösen Trägerschicht einbringen, was bei längeren Fasern schwierig ist, so dass dort die Kohlenstofffasern meist nur oberhalb der Trägerschicht in der Gleitschicht enthalten sind. Die Wärmeableitung ist dann oft unzureichend.

Im Hinblick auf eine homogene Verteilung des Schmierstoffs erweist es sich als vorteilhaft, wenn der Schmierstoff, also Zinksulfid und/oder Bariumsulfat, in Form feiner Teilchen mit einem D50-Wert der Teilchengröße von höchstens 500 nm, vorzugsweise von höchstens 400 nm und insbesondere von 100 - 350 nm vorliegen.

Die Graphitpartikel sollten vorzugsweise als feine Partikel einer Teilchengröße von maximal 15 µm, insbesondere von 1 - 10 µm und vorzugsweise von 1 - 5 µm vorliegen.

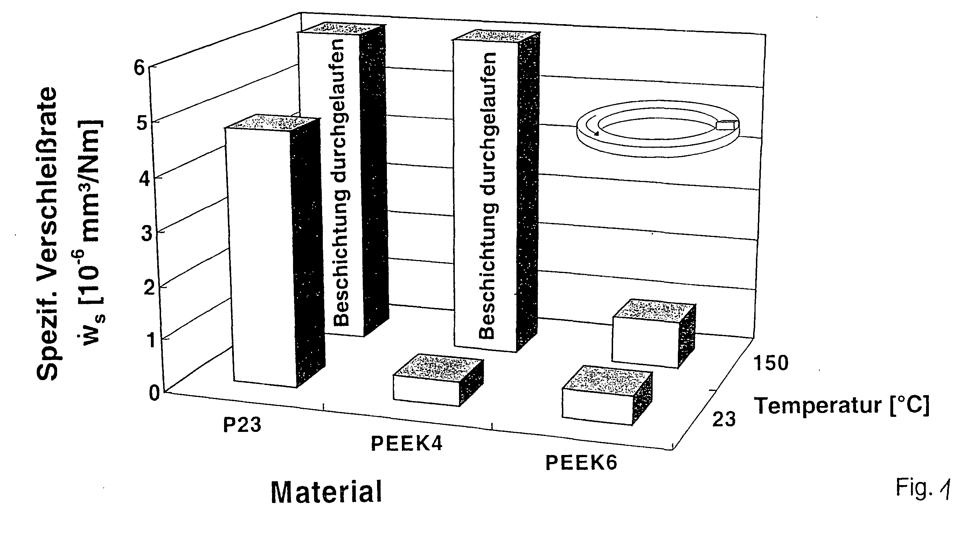

Zur Erläuterung der verbesserten Temperaturstabilität des erfindungsgemäßen Werkstoffs wird nachfolgend auf die Darstellung von Messergebnissen der spezifischen Verschleißrate auf einem Stift-Scheibe-Prüfstand nach Figur 1 hingewiesen.

Es wurde dort eine in der Figur dargestellte Anordnung gewählt, wobei der zu testende Gleitlagerverbundwerkstoff durch den dort angedeuteten Stift gebildet ist, der unter einer Flächenpressung von 0,5 MPa gegen einen gleitenden ringförmigen Gegenkörper aus 100Cr6, $R_a$ = 0,1 bis 0,2 µm gleitet. Die Gleitgeschwindigkeit betrug 1,57 m/sec. Es wurde ein Trockenlauf, also ungeschmiert, getestet. Die Versuchsdauer betrug 20 Stunden. Es wurde bei zwei Prüftemperaturen, nämlich 23° und 150° C, getestet.

Ein erster Vergleichswerkstoff mit der Bezeichnung P23 umfasst ein Gleitschichtmaterial mit PVDF als matrixbildender Kunststoffkomponente, in welche als Schmierstoff Blei und PTFE eingelagert ist. Ferner wurde untersucht ein Gleitlagerverbundwerkstoff mit einer Gleitschicht aus einem bekannten Gleitschichtmaterial der eingangs beschriebenen Art mit einer Matrix aus PEEK und 10 Gew.-% Kohlenstofffasern, 10 Gew.-% PTFE und 10 Gew.-% Graphit. Dieser Gleitlagerverbundwerkstoff ist als PEEK4 bezeichnet. Schließlich wurde ein erfindungsgemäßer Werkstoff mit der Bezeichnung PEEK6 getestet, dessen Matrix aus PEEK gebildet war mit 10 Gew.-% ZnS, 10 Gew.-% Kohlenstofffasern, 10 Gew.-% Graphit und 10 Gew.% $TiO_2$. Die vorstehenden gewichtsprozentualen Angaben beziehen sich jeweils auf die Gesamtmasse des Gleitschichtmaterials. ZnS und $TiO_2$ lagen in einer Teilchengrößenverteilung mit einem D50-Wert von etwa 300 nm vor. Der jeweilige Gleitlagerverbundwerkstoff umfasste eine metallische Stützschicht aus Stahl und eine darauf aufgebrachte poröse Trägerschicht aus Bronze, in deren Poren das die Gleitschicht bildende Gleitschichtmaterial mit einem Überstand über dieses Trägerschicht eingebracht wurde.

Die Bestimmung der spezifischen Verschleißrate während einer Versuchsdauer von 20 Stunden zeigte bei den bekannten Werkstoffen P23 und PEEK4 einen Totalverschleiß, was bedeutet, das ihre Gleitschicht sowie die poröse Trägerschicht vollständig bis auf die aus Stahl bestehende Stützschicht abgerieben wurden. Der erfindungsgemäße Werkstoff PEEK6 hingegen zeichnet sich durch eine hervorragende spezifische Verschleißrate von weniger als 1 x $10^{-6}$ mm$^3$/Nm aus.

Es wurde des weiteren festgestellt, dass das erfindungsgemäße Gleitschichtmaterial hervorragend auf einer metallischen Stützschicht haftet und demgemäß auf eine poröse Trägerschicht auch verzichtet werden kann.

Durch das Extrudieren des Kunststoffgleitmaterials in eine dünne Bandform, das Aufbringen des Bands auf das erhitzte Trägerband ergeben sich wesentliche Vorteile, und zwar hat es sich gezeigt, dass das Kunststoffgleitmaterial auf diese Weise ohne vorheriges Zermahlen zu erfordern in die Poren der porösen Trägerschicht eingebracht werden kann.

**Patentansprüche**

1. Gleitlagerverbundwerkstoff mit einer metallischen Stützschicht, gegebenenfalls mit einer darauf aufgebrachten porösen Trägerschicht, und mit einer eine Gleitfläche für einen Gleitpartner bildenden bleifreien Gleitschicht mit einem Gleitschichtmaterial auf Kunststoffbasis mit PEEK und mit einem Schmierstoff in Form von Zinksulfid und/oder Bariumsulfat, **dadurch gekennzeichnet, dass** das Gleitschichtmaterial PEEK als matrixbildende Kunststoffkomponente und ferner den Schmierstoff in Form von 3 - 15 Gew.-% Zinksulfid und/oder Bariumsulfat und eine härtende Komponente in Form von 3 - 15 Gew.-% Titandioxid und zusätzlich 5 - 25 Gew.-% Kohlenstofffasern und 5 - 15 Gew.-% Graphitpartikel aufweist.

2. Gleitlagerverbundwerkstoff nach Anspruch 1, **dadurch gekennzeichnet, dass** der Schmierstoff in Form feiner Teilchen mit einem D50-Wert der Teilchengröße von höchstens 500 nm, vorzugsweise von höchstens 400 nm vorliegt.

3. Gleitlagerverbundwerkstoff nach Anspruch 1 oder 2, **dadurch gekennzeichnet, dass** die härtende Komponente in Form feiner Teilchen mit einem D50-Wert der Teilchengröße von höchstens 500 nm, vorzugsweise von höchstens 400 nm vorliegt.

4. Gleitlagerverbundwerkstoff nach einem der Ansprüche 1 bis 3, **dadurch gekennzeichnet, dass** die Kohlenstofffasern eine Länge von 50 - 250 µm, insbesondere 60 - 150 µm aufweisen.

5. Gleitlagerverbundwerkstoff nach einem der Ansprüche 1 bis 4, **dadurch gekennzeichnet, dass** die Kohlenstofffasern eine Dicke von 8 - 15 µm aufweisen.

**Claims**

1. Plain bearing composite material with a metallic support layer, optionally with a porous backing layer applied thereto, and with a lead-free sliding layer forming a sliding surface for a sliding partner, comprising a sliding layer material based on a plastics material containing PEEK and comprising a lubricant in the form of zinc sulphide and/or barium sulphate, **characterised in that** the sliding layer material comprises PEEK as a matrix-forming plastics material component and in addition the lubricant in the form of 3 to 15 wt % of zinc sulphide and/or barium sulphate and a curing component in the form of 3 to 15 % by weight titanium dioxide and in addition 5 to 25 % by weight carbon fibres and 5 to 15 % by weight graphite particles.

2. Plain bearing composite material according to claim 1, **characterised in that** the lubricant is present in the form of fine particles with a D50 value of the particle size of not more than 500 nm, preferably of not more than 400 nm.

3. Plain bearing composite material according to either claim 1 or claim 2, **characterised in that** the curing component is present in the form of fine particles with a D50 value of the particle size of not more than 500 nm, preferably of not more than 400 nm.

**4.** Plain bearing composite material according to any one of claims 1 to 3, **characterised in that** the carbon fibres have a length of 50 to 250 μm, in particular 60 to 150 μm.

**5.** Plain bearing composite material according to any one of claims 1 to 4, **characterised in that** the carbon fibres have a thickness of 8 to 15 μm.

## Revendications

**1.** Matériau composite de palier lisse composé d'une couche d'appui métallique, sur laquelle est éventuellement rapportée une couche support poreuse, et d'une couche de glissement sans plomb formant une surface de glissement pour un élément glissant antagoniste, la matière de la couche de glissement étant à base de plastique avec du PEEK et avec un lubrifiant sous la forme de sulfure de zinc et/ou de sulfate de baryum, **caractérisé en ce que** la matière de la couche de glissement comporte du PEEK comme composant plastique constitutif de la matrice et, en outre, le lubrifiant sous la forme de 3 à 15 % en poids de sulfure de zinc et/ou de sulfate de baryum et un composant durcissant sous la forme de 3 à 15 % en poids d'oxyde de titane ainsi que 5 à 25 % en poids de fibres de carbone et 5 à 15 % en poids de particules de graphite.

**2.** Matériau composite de palier lisse selon la revendication 1, **caractérisé en ce que** le lubrifiant est présent sous forme de fines particules dont la valeur granulométrique D50 est de 500 nm au maximum, de préférence de 400 nm au maximum.

**3.** Matériau composite de palier lisse selon la revendication 1 ou la revendication 2, **caractérisé en ce que** le composant durcissant est présent sous forme de fines particules dont la valeur granulométrique D50 est de 500 nm au maximum, de préférence de 400 nm au maximum.

**4.** Matériau composite de palier lisse selon l'une des revendications 1 à 3, **caractérisé en ce que** les fibres de carbone ont une longueur de 50 à 250 μm, notamment de 60 à 150 μm.

**5.** Matériau composite de palier lisse selon l'une des revendications 1 à 4, **caractérisé en ce que** les fibres de carbone ont une épaisseur de 8 à 15 μm.

Fig. 1